# EUROPEAN PATENT APPLICATION

(11) **EP 1 465 064 A2**
(43) Date of publication of application: **06.10.2004**
(21) Application number: 04006268.9
(22) Date of filing: 16.03.2004
(51) Int. Cl.: G06F 9/445

(54) **Operating system deployment methods and systems**

(30) Priority: 18.03.2003 US 455830 P; 17.09.2003 US 667123
(71) Applicant: MICROSOFT CORPORATION, Redmond, Washington 98052-6399 (US)
(72) Inventor: Sardesai, Shantanu, Sammamish Washington 98074 (US); Khan, Shafqat U., Redmond Washington 98052 (US); Kumar, Deepak, Kirkland Washington 98033 (US); Parupudi, Gopal, Issaquah Washington 98029 (US); Deo, Vinay, Redmond Washington 98052 (US)
(74) Representative: Grünecker, Kinkeldey, Stockmair & Schwanhäusser Anwaltssozietät

(57) **Abstract**

Various embodiments provide systems and methods that can be utilized to remotely manage operating system deployments. Various features can allow a system administrator to plan and schedule operating system or image deployment on various computers or machines throughout an organization. Planning and scheduling image deployment, in accordance with the various systems and methods described below, can take place in bandwidth-sensitive environments and are easily scalable. Various embodiments can provide an imaging process that seamlessly migrates data and/or state (e.g. machine/client/user data and state) to a newly-imaged operating system. In addition, at least some embodiments can provide end users with flexibility to alter the behavior of the image deployment within policies that are specified by the system administrator. Additional embodiments provide a rich mechanism by which status reports are generated and sent to the system administrator to assist them in managing the deployment. Further embodiments can conduct operating system deployment *in-place,* meaning that additional disk partitions are not required.

## Description

### RELATED APPLICATION

This application stems from and claims priority to U.S. Provisional Application Serial No. 60/455,830, filed on March 18, 2003, the disclosure of which is incorporated by reference herein.

### TECHNICAL FIELD

This invention pertains to operating system deployment methods and systems.

### BACKGROUND

Deploying and supporting operating systems is probably one of the most complex tasks that an organization's information technology department faces. Deploying a new operating system (whether the new operating system constitutes the old operating system with a new set of applications, or a *de facto* new operating system) typically involves, for each machine in the organization, removing the old operating system and installing the new operating system, along with the software mix that runs on top of the new operating system. In a large organization with many different computers, deploying a new operating system is not an easy task. Deployment can broadly happen in two ways - upgrading and imaging. Upgrading involves the in-place upgrade of the old operating system using the new operating systems's setup program. Imaging involves laying out the image of the new operating system using file-level copy or bit-level copy (without using any setup programs)

One way that operating system deployment can occur is to have a system administrator physically visit each of the machines in the organization and physically install the new operating system. Needless to say, this approach is a very time consuming and intrusive task not only for the system administrator, but for the user of the machine as well. In organizations with large numbers of machines that are to be upgraded, this approach is not practicable.

There is a continuing need to provide methods and systems that automate the process of deploying operating systems in the context of large hierarchies of computers, such as those found in various organizations such as companies and the like.

### SUMMARY

Various embodiments provide systems and methods that can be utilized to remotely manage operating system deployments. Various features can allow a system administrator to plan and schedule operating system or image deployment on various computers or machines throughout an organization. Planning and scheduling image deployment, in accordance with the various systems and methods described below, can take place in bandwidth-sensitive environments and are easily scalable. In addition, at least some embodiments can provide end users with flexibility to alter the behavior of the image deployment within policies that are specified by the system administrator. Additional embodiments provide a rich mechanism by which status reports are generated and sent to the system administrator to assist them in managing/tracking the deployment. Further embodiments can conduct operating system deployment *in-place,* meaning that additional disk partitions are not required. Additional embodiments can be utilized by third parties to assist enterprises in deploying images in third party image formats.

### BRIEF DESCRIPTION OF THE DRAWINGS

Fig. 1 illustrates a high level view of an image deployment process in accordance with one embodiment.
Fig. 2 illustrates an exemplary pre-notification dialog in accordance with one embodiment.
Fig. 3 illustrates an exemplary notification dialog for user-adaptive notification, approval and postponement, in accordance with one embodiment.
Fig. 4 is a flow diagram that describes steps in a method in accordance with one embodiment.
Fig. 5 is a flow diagram that describes steps in a method in accordance with one embodiment.
Fig. 6 illustrates a multi-phase image deployment process in accordance with one embodiment.

### DETAILED DESCRIPTION

### Overview

Various embodiments described below provide systems and methods that can be utilized to remotely manage operating system deployments. Various features can allow a system administrator to plan and schedule operating system or image deployment on various computers or machines throughout an organization. Planning and scheduling image deployment, in accordance with the various systems and methods described below, can take place in bandwidth-sensitive environments and are easily scalable. In addition, at least some embodiments can provide end users with flexibility to alter the behavior of the image deployment within policies that are specified by the system administrator. The described embodiments provide a complete, highly integrated, end-to-end remote image deployment environment in which the targeted machines can be completely managed during operating system upgrade cycles. The solutions provided by the various embodiments can greatly reduce the cost and complexities of operating system deployments. Hence, advantages are achieved for organizations and system administrators that utilize the inventive systems and methods, as well as end users of the machines that are imaged using the techniques described herein.

Preliminarily, the embodiments described below leverage aspects of Microsoft's Systems Management Server (SMS) 2003 architecture-which is a software distribution architecture. The SMS 2003 architecture provides a comprehensive solution for change and configuration management for the Microsoft platform, thus enabling organizations to provide relevant software and updates to users quickly and at reduced cost. A commercially available product that will contain features that implement the embodiments described below is the "Microsoft Systems Management Server 2003 OS Deployment Feature Pack".

It is to be appreciated and understood, however, that the SMS 2003 architecture and environment constitutes but one exemplary paradigm in which image deployment can take place. Other paradigms can be utilized without departing from the spirit and scope of the claimed subject matter.

In the description that follows, various aspects of the embodiments will be described in terms of a process or steps that can be carried out by suitably programmed computers, also interchangably referred to as "machines" throughout the text. It is to be understood and appreciated that the described processes and steps can be embodied, where appropriate, in the form of computer-readable instructions that can reside on any suitable type of computer readable medium. These instructions, when executed by one or more processors, perform the various processes or steps described below. By way of example and not limitation, these types of computer-readable media can comprise random access memory (RAM), read only memory (ROM), programmable read only memory (PROM), electrically erasable programmable read only memory (EEPROM), CD, and any other type of permanent or temporary type of storage.

The various embodiments described below can provide advantages that include (1) in-place imaging, (2) user-adaptive notification, approval, and postponement, (3) image deployment over bandwidth-sensitive intermittent links, and (4) rich status messaging for troubleshooting individual computer as well as systematic issues, all of which are described in greater detail below.

### Exemplary Image Deployment Utilizing, the SMS 2003 Architecture

The process of image deployment, in accordance with the embodiments described below, can be thought of as having a number of different stages which include image creation, image management, image distribution, and finally image deployment on the destination computers or target collection of machines.

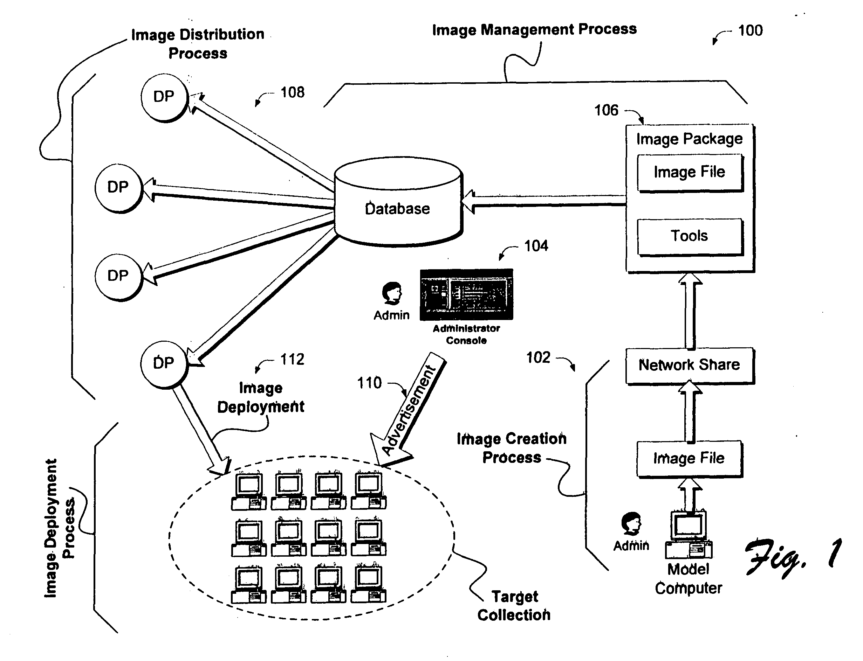

To better assist the reader in understanding the overall process of image deployment, particularly in the context of the SMS 2003 architecture, please refer to Fig. 1 which illustrates a higher level view of the image deployment process by showing the data/information flow generally at 100. The discussion that follows breaks out a discussion of each of the stages under their own respective headings.

### Image Creation Process

Initiating the image deployment process is the image creation process, shown generally at 102. During this process, a system administrator creates the image that is to be deployed across the various target machines. In this embodiment, the system administrator sets up a model computer with the operating system that is to be imaged. In addition, the system administrator can install all of the pertinent applications that will be used to execute on the operating system that is to be deployed.

In the context of SMS 2003, an *Image Capture Wizard* application is executed and enables the system administrator to capture a system image. By way of example and not limitation, the *Image Capture Wizard* application presents the system administrator with a number of different user interface pages that step the administrator through the image capturing process. For example, after an introductory page, a *source and destination page* can be presented to the system administrator and allows the administrator to specify the drive that will be used as a source for generating the image, the name of the image file, a network share where the image file will be stored, and the account and password that will be used to access the network share.

An *image properties page* allows the system administrator to specify image properties that will be stored inside an image file that is created. This includes information that is helpful for deploying the image to target machines at a later stage. A *completion page* allows the system administrator to complete the image capture wizard, and start the image capture process. A *progress page* can display indicia of the image capturing process, e.g. by using a progress bar. In addition, the *progress page* can also display the name of the source file being captured, data already captured, and elapsed and remaining time estimates. Various other user interface pages can be presented to the system administrator such as a *cancel confirmation page* to cancel the image capture, an *error handling page* for enabling the system administrator to handle errors that can occur during the image capture process, and various other pages such as a *completion page* which is displayed at the successful conclusion of the image capture process. Upon completion of the image capture process, the image file can be compressed and saved as a *network share* specified by the administrator. Part of the image capture process can add the captured image to a database that is subsequently used during the image management process described just below.

Visual examples of these user interface components are provided in the related provisional application which is incorporated by reference above.

### Image Management Process

Once the image has been captured from the model computer and saved as a network share, the image management process can begin. In one embodiment, image management can take place utilizing a *System Administrator Console* 104. In the context of SMS, this console is referred to as the *SMS Adminstrator Console.*

During the image management process, an *image package* (also referred to as an "image file package") is created that contains the image file that was created during the image capture process, along with all of the necessary tools that are needed by the image. An exemplary image package is shown diagrammatically at 106. For example, from the *Administrator Console* the system administrator can create an image package that essentially contains a system image, configuration information, and a *deployment environment* and its executable. The deployment environment provides all of the necessary mechanisms to install the new system image, as will become apparent below.

In one embodiment, the deployment environment comprises Microsoft's WinPE^{TM} operating system. WinPE™ is an operating system based on Microsoft Windows® XP Professional that facilitates building custom solutions that speed up deployment through automation. WinPE™ can run Windows setup, scripts, and imaging applications, as will be appreciated by the skilled artisan.

Specifically, during image management, the system administrator creates the image file, specifies a package name, and specifies the folder that contains the source files for the package, as well as the paths and files names for a *package definition file* and an *image deployment file.*

The package definition file is used to set all SMS 2003 package and SMS 2003 program properties except those that are overridden for image deployment purposes. The image deployment file is used to set image deployment properties. After the image package has been created, it can be added to a suitable database, as shown, for distribution during the image distribution process.

### Image Deployment Files

With respect to *image deployment files,* consider the following. In one embodiment, the system administrator can specify, through an image deployment file, properties that are to be migrated from pre-existing computer configurations. For example, the system administrator can select various machine state properties for migration (or to default to) such as computer name, user name, organization name, product key (for anti-piracy measures), administrator password, and IP address.

Additionally, the system administrator can specify which pieces of SMS client state need to be migrated from the pre-existing client on the destination computer or configured fresh on the destination computer after the image has been deployed. Examples of SMS client state information include such things as the SMS GUID (which identifies the machine uniquely as an SMS client), SMS client assignment, and SMS client policy.

Additionally, the system administrator can specify various deployment options for image deployment. For example, in one embodiment, the system administrator can select an option that ensures that the image will not be deployed again on the same computer if the same image is currently applied to the computer. Alternately or additionally, the system administrator can specify an option that enables the user to give their permission to have the image deployed on their computer. If the user does not give their permission to have the image deployed on their machine, then image deployment does not take place. Further, in some embodiments, the system administrator can select an option that allows the user to specify when image deployment is to take place. For example, in this embodiment, the user can specify in days and/or hours. This gives the user the opportunity to flexibly schedule image deployment. This aspect is explored in more detail in the section below entitled "User-Adaptive Notification, Approval and Postponement".

Additionally, the system administrator can specify an appropriate location for saving user application settings and/or user data files during image deployment. In case remote backup to a network location is requested, a network location, and the account name/password combination needed to gain write access to it can also be specified. Further, the system administrator can specify the applications whose settings will be migrated to the destination computer during image deployment. Additionally, the system administrator can specify the file types and locations of user data that will be migrated during image deployment.

### Image Distribution Process

Once the image has been captured and the image file package has been created and managed by the system administrator, the image file package can now undergo an image distribution process. One goal of the image distribution process is to distribute the image so that one or more target computers can be imaged.

In accordance with one embodiment, image file packages are distributed to one or more *distribution points (DP),* which is diagrammatically shown at 108. Distribution points can effectively serve as geographically disperse *file shares* where individual clients can obtain the image file packages. Using distribution points along with a multi-phased deployment, discussed below, enables image deployment to function quite well in bandwidth-limited environments that have intermittent links. This is particularly the case in embodiments that utilize the SMS architecture for image deployment.

Once the image file package has been distributed to one or more distribution points, the package can be *advertised* to the target or destination computers. That is, the system administrator can specify a collection of computers to which the image file package is to be advertised. Once the system administrator has distributed the image file packages and configured an advertisement, individual computers of the collection can receive the advertisement, which is diagrammatically shown at 110.

### Image Deployment Process

Image deployment can be considered to begin when advertisements are sent to the target computers of the collection that is targeted for imaging. In some embodiments, the system administrator can cause advertisements to be sent to the target computers. The advertisements advise the users that their computer has been selected for imaging a new operating system.

### User-Adaptive Notification, Approval and Postponement

In one embodiment, the users of the targeted computers can be given advance notification of the planned image deployment action, and can optionally allow, disallow or postpone deployment of the image. In this embodiment, a notification dialog, configured by the system administrator, can be displayed on the target machine to notify the user that an image deployment is desired.

In some embodiments, the system administrator can configure the notification dialog so that the user is simply advised of the planned image deployment and informed when image deployment will occur, e.g. in 3 hours, 23 minutes. In this embodiment, the notification dialog can provide a countdown so that the user is given an opportunity to complete their work prior to deployment.

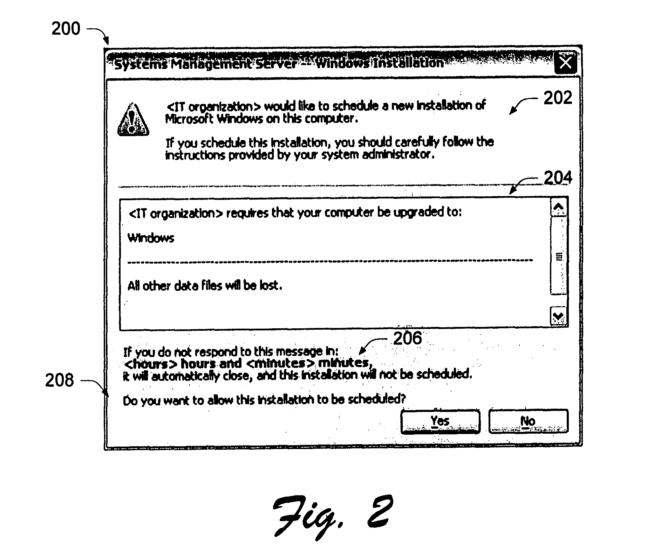

In another embodiment, the system administrator can configure the notification dialog so that the user has a more direct, proactive role in establishing when, if at all, image deployment is to occur. As an example, consider Fig. 2 which shows an exemplary pre-notification dialog in accordance with one embodiment generally at 200.

There, a dialog portion 202 contains a default message that is displayed in the top part of the dialog, near the alert icon, as shown in the screenshot. This message informs the user that a new operating system installation is desired. A dialog portion 204 can be provided and allows the system administrator to custom design a message for the user. A dialog portion 206 comprising a count down can be provided, if enabled by the system administrator. In this example, dialog portion 206 informs the user that if they do not respond to the notification, then image deployment will occur automatically. However, if the user does respond, then in some embodiments the user can be given an opportunity to postpone image deployment. A dialog portion 208 can be provided an enables the user to disallow the image deployment.

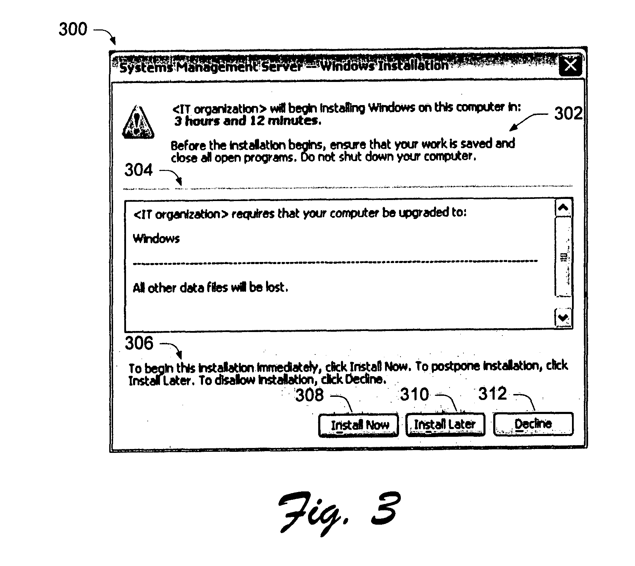

In some embodiments, a notification dialog that is configured by the system administrator can be displayed for the user when an image deployment package executes on the target machine. Specifically, in this embodiment a dialog box can display an administrator-specified user interface to notify the user that image deployment is starting up. The dialog box can be configured to allow the user to postpone deployment of the image, wait for an administrator-specified countdown interval, deploy the image right away, or decline the image altogether. As an example, consider Fig. 3 which shows an exemplary notification dialog in accordance with one embodiment generally at 300.

There, a dialog portion 302 comprises a default message that is displayed in the top part of the dialog, near the alert icon, as shown in the figure. This dialog portion can also contain a count down, if enabled by the system administrator, that displays a running countdown of remaining hours and minutes until deployment. A dialog portion 304 can be provided and can enable the system administrator to configure a custom message for the users.

Dialog portion 306 comprises the portion of the dialog that enables the user to proactively participate in the imaging of their computer. Specifically, an "Install Now" button 308 allows the user to immediately begin image deployment. An "Install Later" button 310 enables the user to either install later as scheduled, or enter his or her desired postponement duration (within a maximum limit which can specified by the administrator). A "Decline" button 312 enables the user to cancel the image deployment.

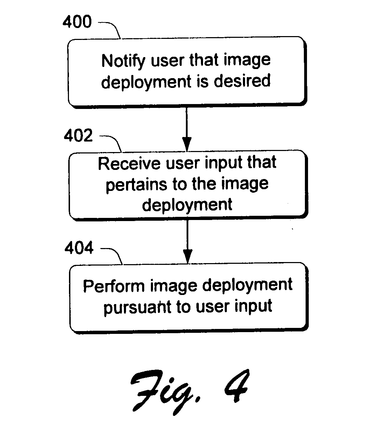

Fig. 4 is a flow diagram that describes steps in a method in accordance with one embodiment. The method can be implemented by software that executes on a destination computer that is targeted for imaging. In some embodiments, this software can comprise both a client that is associated with the old operating system, and a client that is associated with the new operating system, as will become apparent below.

Step 400 notifies a user that image deployment is desired for their particular computer. Notification can take place using any suitable means. In one embodiment, notification can take place by using a dialog box, such as the one shown and described in connection with Fig. 3. Step 402 receives user input that pertains to the image deployment. The user input can comprise any suitable type of user input. In the Fig. 3 example, the user is given an opportunity to either have the image deployed immediately (i.e. install now), postpone the image deployment (i.e. install later), and/or decline the image deployment all together.

In an event that the user opts to postpone the image deployment, in at least some embodiments, the user is given an opportunity to flexibly schedule the deployment by selecting an appropriate time for deployment, or a time interval after which deployment will occur.

Step 404 performs image deployment pursuant to the user's input. For example, if the user opts to install the image "now", then the image will be immediately installed. If the user opts to postpone image deployment, the deployment will be postponed. If the user opts to decline image deployment, then the image will not be deployed.

Assume now that the image package has been advertised and, as part of the advertisement execution, image deployment now begins at 112 (Fig. 1).

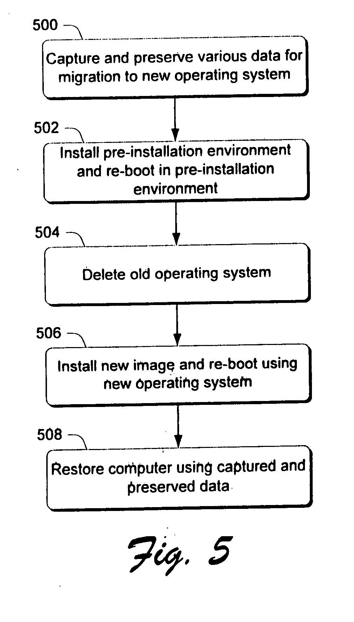

Fig. 5 is a flow diagram that describes steps in an image deployment method in accordance with one embodiment. Following the description of this method, an implementation example is described to assist the reader in understanding certain nuances associated with image deployment.

Step 500 captures and preserves various data for migration to the new operating system that is to be imaged. Any suitable data can be captured and preserved, e.g. data associated with the machine, the user, the client executing on the user and the like. A specific example of these different types of data is given below. Preservation of the data can take place by saving the data in a suitable file that can be later used in a restoration process, as will become apparent below.

Step 502 installs a pre-installation environment and re-boots the machine in the pre-installation environment. By using a pre-installation environment in connection with the image deployment, the image can be deployed *in place,* meaning that the new operating system can be deployed in the very same disk partition that originally contained the old operating system. It is to be appreciated and understood that various inventive features described herein can be utilized in scenarios in which imaging is not conducted in place. There are, however, advantages associated with performing the imaging in place. For example, some machines may not have separate physical partitions. In these contexts, the inventive image deployment techniques can flexibility accommodate such machines. Another advantage of the in place imaging is that non-operating system data on the disk can be preserved.

Step 504 deletes the old operating system from within the pre-installation environment. Once the old operating system is deleted, step 506 installs the new image and re-boots the machine using the new operating system. Step 508 then restores the computer using captured and preserved data from step 500.

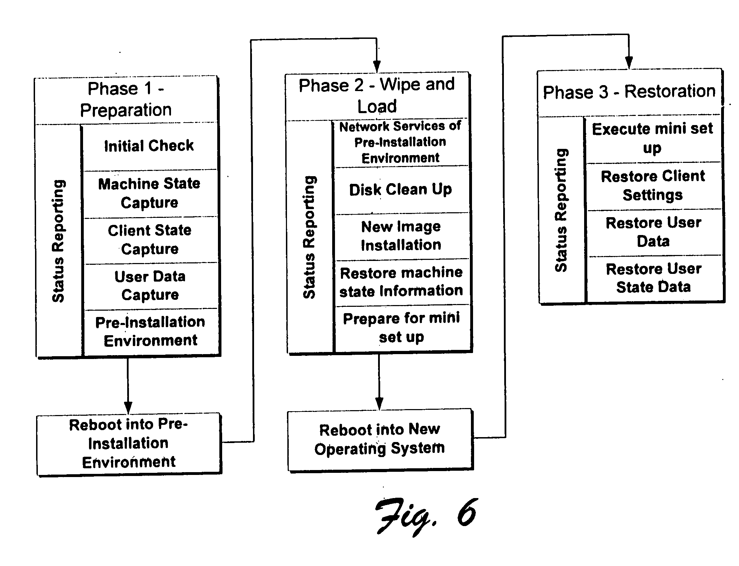

For purposes of the implementation example that follows, image deployment can divided into three different phases-a preparation phase (Phase 1), a wipe and load phase (Phase 2), and a restoration phase (Phase 3), each of which is individually discussed below. These phases and their constituent parts are diagrammatically illustrated in Fig. 6.

### Phase 1―Preparation Phase

Phase 1 of the image deployment process effectively prepares the target or destination computer for imaging. During this phase, a number of things can occur. First, an initial check can be performed to ensure that the destination computer is in the correct state for imaging. Specifically, part of the initial check can be to ascertain whether there is enough disk space to conduct the imaging. Additionally, in the SMS context, as part of the process of capturing client information and machine state, checks can be performed to ascertain that the SMS client site code, as well as the SMS GUID and other machine specific data is assigned and/or retrievable. Next, various state information associated with the destination computer and/or the user can be captured and preserved for migration after imaging the new operating system. State capturing can be performed by a state capture tool, such as one that is employed to capture user state data. Other mechanisms or agents can be used to capture user data, machine state and client state.

The machine state that is captured can include such things as the computer name, the domain, network settings and the like. These settings can be specified in a file which, for purposes of example, is referred to as the sysprep.inf file. The client state that is captured typically includes information that is needed or used to restore the computer during phase 3, e.g. site association or code (e.g. a site code, such as one used in the SMS context, can identify which SMS Primary Site Server the SMS client sends its inventory data to, and from which it receives software distribution policies, advertisements and the like), client globally unique identifier (GUID), associated distribution point and the like. In embodiments that utilize the SMS architecture, the client state information that is captured and preserved pertains to the SMS client that is executing on the destination computer. The user state that is captured can include such things as the current logged-on user profile, user-specific settings like Internet browser favorites list, wall paper on the user's desktop, the screensaver selected by the user, and the like. The user data that is captured and preserved can include folders and files that are desired to be migrated, network share settings that the like. All of the information that is captured can be stored locally on the destination computer or optionally on a network location.

Following completion of the state/data capturing process, a pre-installation environment can be installed on the destination computer. That is, before deletion of the old operating system, a pre-installation environment is installed on the destination computer so that the old operating system can be deleted. The pre-installation environment effectively comprises a subset of an operating system that is installed on the hard disk. Once installed, the destination computer is re-booted into the pre-installation environment. In embodiments that utilize the SMS architecture, the pre-installation environment comprises WinPE^{TM} whose operation and functionality will be understood by those of skill in the art.

Installation of and rebooting into the pre-installation environment concludes phase 1.

### Phase 2―Wipe and Load Phase

Phase 2, referred to as the wipe and load phase, effectively deletes the old operating system and installs the new operating system. Specifically, once the pre-installation environment has been installed and the destination computer has been re-booted into the pre-installation environment, a network services component of the pre-installation environment is started. This effectively enables the destination computer to connect with an associated distribution point. Connecting with the distribution point enables the destination computer to access the necessary image file, the deployment settings and other necessary tools that are utilized during the wipe and load phase. Specifically, connecting with the associated distribution point enables the destination computer to access the image packages and deploy the image file that resides at the distribution point.

In one embodiment, a deployment agent can use the pre-installation environment to perform a disk clean up process in which the disk partition in which the old operating system resides has the old operating system's associated folders and files deleted. After the old operating system is effectively removed from the disk partition, the new image is installed. Here, the deployment agent accesses the image file, decompresses the image file and installs the files and folders associated with the new operating system into the disk partition on the destination computer. It is during the image installation process that the entire directory structure and its contents are laid out on the disk partition.

After the new image is installed, the deployment agent can take steps to restore the machine state. That is, recall that during phase 1, the machine state and settings of the destination computer were captured and specified in a file sysprep.inf. In one embodiment, the sysprep.inf file is modified to restore the computer specific information. Modification of the sysprep.inf file entails, in this embodiment, writing all of the machine state-specific information into the file so that the information can be migrated for the newly installed image.

At this point in the process, the destination computer is prepared for what is referred to as a "mini setup". The mini setup executes to use all of the information that was captured in phase 1, to restore the new operating system. At this point, however, mini setup has not been executed.

At the conclusion of phase 2, the destination computer is re-booted into the new operating system and phase 3 begins.

### Phase 3―Restoration

Phase 3 is the phase in which the destination computer is restored using the information that was captured during phase 1. In one embodiment, before booting into the new operating system, mini setup is executed. Then, the new operating system will be initialized and started. At this point, a *restore agent* is executed. The restore agent has several steps that it performs. First, the restore agent restores the client settings that were captured in phase 1. In embodiments that utilize the SMS architecture and infrastructure, this involves restoring the SMS client specific settings. Additionally, the restore agent restores the user data that was captured in phase 1. Additionally, the restore agent can restore any of the user state data that was captured during phase 1.

At the conclusion of phases 1, 2 and 3 the destination computer is now fully configured with the new operating system and is ready for operation.

### Status Reporting

Notice in the illustration of Fig. 6 that a column entitled "Status Reporting" occurs throughout the various phases. In accordance with one embodiment, a rich collection of status reports can be developed, maintained and transmitted during the preparation phase, the wipe and load phase, and the restoration phase. For example, various status reports can be generated and sent to the system administrator to inform them on how the imaging process is progressing.

The status reporting process can track errors and events that might arise during each of the individual phases. For example, if during the preparation phase, a problem is encountered capturing the machine state, a status report can be generated and sent to the system administrator to apprise them of the situation. Likewise, if a problem is encountered during installation of the pre-installation environment, the system administrator can be advised of this by a status report.

Alternately or additionally, the status reports can be generated to track the progression of the various phases. For example, a system administrator might be advised through various status reports when the machine state has been successfully captured, the client state has been successfully captured and the like. Further, the system administrator might be advised when the -disk has been successfully cleaned up (phase 2) and when the machine state has been restored. Advantageously, the status reporting function takes place across the operating system deployment so that the system administrator has an opportunity to receive a very rich collection of status reports so that they can monitor the progress of the deployment across one or more machines..

### Status Reporting Using Old and New Clients

One interesting feature of the status reporting embodiment, and one which adds to the perceived seamlessness of the deployment, is the notion of performing the status reporting using an old client that executes on the machine prior to deployment and a new client that is installed as part of the deployment. Specifically, and in the context of the SMS infrastructure, consider the following example.

In the SMS context, in order to receive and process the advertisement associated with the desired operating system deployment, an SMS client is provided on the target machine. The SMS client, in this example, comprises the software code that is familiar with the SMS architecture and deployment process. As the advertisement is received and the target machine enters phase 1 (Fig. 6), the SMS client (referred to in this example as the "old client") on the target machine guides the target machine through phase 1 and generates status messages that are returned to the system administrator. Now, when the target machine enters phase 2-the wipe and load phase-not only is the old image removed from the hard disk, but the old client is removed as well and a new client is installed. The new client continues the imaging process and continues to generate and transmit status reports for the system administrator.

To the system administrator, it appears as if the status reports have been continually generated in a seamless manner. In reality, at least in this embodiment, the status reports have been generated by the old client (prior to the wipe and load phase) and the new client (after image installation).

### Third Party Image Deployment

One advantageous feature of the described embodiments is that the infrastructure described above can be utilized by third parties to assist enterprises in deploying third party image formats. Enterprises may have spent millions of dollars in capturing Operating System images in these third party image formats. Yet, when these enterprises wish to deploy these operating system images in third party formats, they are faced with the very same problems described in the "Background" section-i.e. cost and inconvenience. By providing a comprehensive set of application program interfaces (APIs), these enterprises can conduct image deployment with popular image formats with a greater degree of convenience and flexibility than has been afforded in the past.

As such, the APIs can implement the functionality that is described above to enable third parties, in at least some embodiments, to allow the SMS 2003 OS Deployment Feature Pack to create an image, manage the image, distribute the image and deploy the image.

### Conclusion

The various embodiments described above provide several mechanisms that can perform end-to-end, remote operating system imaging of a client computing device. In a typical hierarchical scenario, such as a corporate scenario, the deployment can be performed across the network, even with bandwidth constraints or intermittent connectivity. Multiple phases and distribution points are utilized to mitigate the impact of these bandwidth constraints and/or intermittent connectivity.

Various embodiments provide system administrators with a comprehensive, complete, and up-to-date status of their deployments and enable the administrators to track and, if necessary, troubleshoot the deployment. Status messages or reports can also be categorized and summarized to help flush out systemic trends and issues. At the same time, the end-user whose desktop is being imaged, can be provided with a desirable degree of flexibility so that the deployment does not interrupt or interfere with their work and can be approved or postponed as per their individual needs and according to the policies specified.

In various embodiments, by staging image deployment in phases on a network share that is accessible to the client computing device, the need for an active server component that is required by most of the existing technologies that perform image deployment can be eliminated.

In some embodiment, the actual image deployment process that takes place on the targeted client computer is unique in the sense that the image can be applied *in-place,* without requiring additional disk-partitions, bootable disks or CDs, which is unlike any other existing image deployment technologies.

Although the invention has been described in language specific to structural features and/or methodological steps, it is to be understood that the invention defined in the appended claims is not necessarily limited to the specific features or steps described. Rather, the specific features and steps are disclosed as preferred forms of implementing the claimed invention.

## Claims

1. A method comprising:
installing a pre-installation environment on a target computer that is desired to be imaged with a new operating system;
re-booting the target computer in the pre-installation environment;
deleting an old operating system from within the pre-installation environment;
installing the new operating system from within the pre-installation environment; and
re-booting the target computer in the new operating system;
said acts being effective to in-place image the target computer with the new operating system.

2. The method of claim 1, wherein the act of installing the pre-installation environment comprises installing the pre-installation environment in a same disk partition as the old operating system.

3. The method of claim 1 further comprising capturing data and state for migration to the new operating system and migrating said captured data and state to the new operating system.

4. The method of claim 1 further comprising capturing machine data for migration to the new operating system and migrating said captured machine data to the new operating system.

5. The method of claim 1 further comprising capturing user data for migration to the new operating system and migrating said captured user data to the new operating system.

6. The method of claim 1 further comprising capturing user state for migration to the new operating system and migrating said captured user state to the new operating system.

7. The method of claim 1 further comprising capturing client data for migration to the new operating system and migrating said captured client data to the new operating system.

8. One or more computer readable media having computer readable instructions thereon which, when executed by one or more processors, cause the one or more processors to perform the method of claim 1.

9. A set of application program interfaces (APIs) configured to perform the method of claim 1.

10. A system comprising:
one or more target computers each having one or more computer-readable media;
computer readable instructions on the one or more computer readable media which, when executed by one or more processors, cause the one or more processors to perform a method comprising:
capturing data for migration to a new operating system, said data comprising one or more of machine data, user data, and client data;
installing a pre-installation environment on a target computer that is desired to be imaged with a new operating system;
re-booting the target computer in the pre-installation environment;
deleting an old operating system from within the pre-installation environment;
installing the new operating system from within the pre-installation environment;
re-booting the target computer in the new operating system;
migrating said captured data to the new operating system;
said acts being effective to in-place image the target computer with the new operating system.

11. A method comprising:
using a multi-phase image deployment process to remotely image multiple target computers with a new operating system, said multi-phase deployment process comprising at least:
a preparation phase in which various data is captured for migration to the new operating system;
a wipe and load phase in which an old operating system is deleted and the new operating system is installed in place; and
a restoration phase in which captured data is migrated to the new operating system.

12. The method of claim 11, wherein the preparation phase can capture data associated with one or more of machine state, client state, user state and/or user data.

13. The method of claim 12, wherein machine state data can comprise one or more of computer name, domain, and network settings.

14. The method of claim 12, wherein client state data can comprise Site association or code, client GUID, and an associated distribution point.

15. The method of claim 12, wherein user state data can comprise a user profile.

16. The method of claim 12, wherein user data can comprise folders and files desired for migration and network share settings.

17. The method of claim 11, wherein the preparation phase comprises installing a pre-installation environment from which in place installation can take place.

18. The method of claim 11, wherein the preparation phase comprises installing a pre-installation environment from which in place installation can take place, wherein the pre-installation environment comprises WinPE^{TM}.

19. The method of claim 11, wherein the wipe and load phase comprises enabling a target computer to connect with at least one of a number of destination points from which an image file containing the new operating system image is obtained.

20. The method of claim 11, wherein the multi-phase image deployment process is configured to generate status reports during each of the phases, said status reports being transmittable to a system administrator to facilitate management of the image deployment process.

21. The method of claim 11, wherein the multi-phase image deployment process is configured to generate status reports during each of the phases, said status reports being transmittable to a system administrator to facilitate management of the image deployment process, wherein status reports are generated by an old client associated with the old operating system, and a new client associated with the new operating system.

22. One or more computer readable media having computer readable instructions thereon which, when executed by one or more processors, cause the one or more processors to perform the method of claim 11.

23. A set of application program interfaces (APIs) configured to perform the method of claim 11.

24. A system comprising:
one or more target computers each having one or more computer-readable media;
computer readable instructions on the one or more computer readable media which, when executed by one or more processors, cause the one or more processors to perform a method comprising:
using a multi-phase image deployment process to remotely image multiple target computers with a new operating system, said multi-phase deployment process comprising at least:
a preparation phase in which various data is captured for migration to the new operating system;
a wipe and load phase in which an old operating system is deleted and the new operating system is installed in place; and
a restoration phase in which captured data is migrated to the new operating system.

25. A method comprising:
notifying a target computer user that a new operating system image is desired to be deployed on the target computer; and
providing the user with an option to postpone image deployment on the target computer.

26. The method of claim 25 further comprising providing the user with an option to disallow image deployment on the target computer.

27. The method of claim 25 further comprising providing the user with an option to immediately begin an image deployment process on the target computer.

28. The method of claim 25 further comprising providing the user with an option to disallow image deployment process on the target computer, and an option to immediately begin an image deployment process on the target computer.

29. The method of claim 25, wherein the act of providing comprises allowing the user to specify a postponement duration.

30. One or more computer readable media having computer readable instructions thereon which, when executed by one or more processors, cause the one or more processors to perform the method of claim 25.

31. A set of application program interfaces (APIs) configured to perform the method of claim 25.

32. A method comprising:
notifying a target computer user that a new operating system image is desired to be deployed on the target computer;
providing the user with an option to at least (1) disallow image deployment on the target computer, (2) immediately begin an image deployment process on the target computer, and (3) postpone image deployment on the target computer;
receiving user input that pertains to the desired image deployment; and
performing image deployment pursuant to the user's input.

33. One or more computer readable media having computer readable instructions thereon which, when executed by one or more processors, cause the one or more processors to perform the method of claim 32.

34. A set of application program interfaces (APIs) configured to perform the method of claim 32.

35. A method comprising:
creating an operating system image that is to be deployed across a plurality of target machines, said image comprising at least one image file;
creating an image package that contains said one image file, at least a deployment environment, tools and configuration files for installing the image on said target machines; and
distributing the image package to one or more distribution points from which individual target machines can access the image package.

36. The method of claim 35, wherein said deployment environment comprises WinPE^{Tm}.

37. The method of claim 35, wherein said one or more distribution points comprise one or more file shares.

38. The method of claim 35 further comprising generating an advertisement for the image package and sending the advertisement to one or more of the target machines, said advertisement being configured to advise target machine users that a new operating system is desired to be deployed on their machine.

39. One or more computer readable media having computer readable instructions thereon which, when executed by one or more processors, cause the one or more processors to perform the method of claim 35.

40. A set of application program interfaces (APIs) configured to perform the method of claim 35.

41. A system comprising:
one or more computers each having one or more computer-readable media;
computer readable instructions on the one or more computer readable media which, when executed by one or more processors, cause the one or more processors to perform a method comprising:
creating an operating system image that is to be deployed across a plurality of target machines, said image comprising one or more image files;
creating an image package that contains said one or more image files and at least a deployment environment for installing the image on said target machines; and
distributing the image package to one or more distribution points from which individual target machines can access the image package.

42. A method comprising:
creating an operating system image that is to be deployed across a plurality of target machines, said image comprising one or more image files;
creating an image package that contains said one or more image files and at least a deployment environment for installing the image on said target machines;
distributing the image package to one or more distribution points from which individual target machines can access the image package;
notifying a target machine user that a new operating system image is desired to be deployed on the target machine; and
providing the user with an option to postpone image deployment on the target machine.

43. The method of claim 42 further comprising providing the user with an option to disallow image deployment on the target machine.

44. The method of claim 42 further comprising providing the user with an option to immediately begin an image deployment process on the target machine.

45. The method of claim 42 further comprising providing the user with an option to disallow image deployment process on the target machine, and an option to immediately begin an image deployment process on the target machine.

46. The method of claim 42, wherein the act of providing comprises allowing the user to specify a postponement duration.

47. One or more computer readable media having computer readable instructions thereon which, when executed by one or more processors, cause the one or more processors to perform the method of claim 42.

48. A set of application program interfaces (APIs) configured to perform the method of claim 42.

49. A system comprising:
one or more computers each having one or more computer-readable media;
computer readable instructions on the one or more computer readable media which, when executed by one or more processors, cause the one or more processors to perform a method comprising:
creating an operating system image that is to be deployed across a plurality of target machines, said image comprising one or more image files;
creating an image package that contains said one or more image files and at least a deployment environment for installing the image on said target machines;
distributing the image package to one or more distribution points from which individual target machines can access the image package;
notifying a target machine user that a new operating system image is desired to be deployed on the target machine;
providing the user with options to postpone, disallow, and immediately begin image deployment on the target machine.

50. A method comprising:
creating an operating system image of a new operating system that is to be deployed across a plurality of target machines, said image comprising one or more image files;
creating an image package that contains said one or more image files and at least a deployment environment for installing the image on said target machines;
distributing the image package to one or more distribution points from which individual target machines can access the image package;
installing the deployment environment on a target machine that is desired to be imaged with the new operating system;
re-booting the target machine in the deployment environment;
deleting an old operating system from within the deployment environment;
installing the new operating system from within the deployment environment; and
re-booting the target machine in the new operating system;
said acts being effective to in-place image the target machine with the new operating system.

51. The method of claim 50 further comprising capturing data for migration to the new operating system and migrating said captured data to the new operating system.

52. The method of claim 50 further comprising capturing machine data for migration to the new operating system and migrating said captured machine data to the new operating system.

53. The method of claim 50 further comprising capturing user data for migration to the new operating system and migrating said captured user data to the new operating system.

54. The method of claim 50 further comprising capturing user state for migration to the new operating system and migrating said captured user state to the new operating system.

55. The method of claim 50 further comprising capturing client data for migration to the new operating system and migrating said captured client data to the new operating system.

56. One or more computer readable media having computer readable instructions thereon which, when executed by one or more processors, cause the one or more processors to perform the method of claim 50.

57. A set of application program interfaces (APIs) configured to perform the method of claim 50.

58. A system comprising:
one or more computers each having one or more computer-readable media;
computer readable instructions on the one or more computer readable media which, when executed by one or more processors, cause the one or more processors to perform a method comprising:
creating an operating system image of a new operating system that is to be deployed across a plurality of target machines, said image comprising one or more image files;
creating an image package that contains said one or more image files and at least a deployment environment for installing the image on said target machines;
distributing the image package to one or more distribution points from which individual target machines can access the image package;
installing the deployment environment on a target machine that is desired to be imaged with the new operating system;
re-booting the target machine in the deployment environment;
deleting an old operating system from within the deployment environment;
installing the new operating system from within the deployment environment; and
re-booting the target machine in the new operating system;
said acts being effective to in-place image the target machine with the new operating system.

59. A method comprising:
creating an operating system image of a new operating system that is to be deployed across a plurality of target machines, said image comprising one or more image files;
creating an image package that contains said one or more image files and at least a deployment environment for installing the image on said target machines;
distributing the image package to one or more distribution points from which individual target machines can access the image package; and
using a multi-phase image deployment process to remotely image, from at least one distribution point, multiple target computers with the new operating system, said multi-phase deployment process comprising at least:
a preparation phase in which various data is captured for migration to the new operating system;
a wipe and load phase in which an old operating system is deleted and the new operating system is installed in place; and
a restoration phase in which captured data is migrated to the new operating system.

60. The method of claim 59, wherein the preparation phase comprises installing a pre-installation environment from which in place installation can take place.

61. The method of claim 59, wherein the wipe and load phase comprises enabling a target machine to connect with at least one of the distribution points to obtain the image package.

62. The method of claim 59, wherein the multi-phase image deployment process is configured to generate status reports during each of the phases, said status reports being transmittable to a system administrator to facilitate management of the image deployment process.

63. The method of claim 59, wherein the multi-phase image deployment process is configured to generate status reports during each of the phases, said status reports being transmittable to a system administrator to facilitate management of the image deployment process, wherein status reports are generated by an old client associated with the old operating system, and a new client associated with the new operating system.

64. One or more computer readable media having computer readable instructions thereon which, when executed by one or more processors, cause the one or more processors to perform the method of claim 59.

65. A set of application program interfaces (APIs) configured to perform the method of claim 59.

66. A system comprising:
one or more computers each having one or more computer-readable media;
computer readable instructions on the one or more computer readable media which, when executed by one or more processors, cause the one or more processors to perform a method comprising:
creating an operating system image of a new operating system that is to be deployed across a plurality of target machines, said image comprising one or more image files;
creating an image package that contains said one or more image files and at least a deployment environment for installing the image on said target machines;
distributing the image package to one or more distribution points from which individual target machines can access the image package; and
using a multi-phase image deployment process to remotely image, from at least one distribution point, multiple target computers with the new operating system, said multi-phase deployment process comprising at least:
a preparation phase in which various data is captured for migration to the new operating system;
a wipe and load phase in which an old operating system is deleted and the new operating system is installed in place; and
a restoration phase in which captured data is migrated to the new operating system.

67. The system of claim 66, wherein the multi-phase image deployment process is configured to generate status reports during each of the phases, said status reports being transmittable to a system administrator to facilitate management of the image deployment process.

68. The system of claim 66, wherein the multi-phase image deployment process is configured to generate status reports during each of the phases, said status reports being transmittable to a system administrator to facilitate management of the image deployment process, wherein status reports are generated by an old client associated with the old operating system, and a new client associated with the new operating system.

69. A method comprising:
remotely deploying a new operating system on one or more target computers by sending image packages containing an image of the new operating system to one or more distribution points and staging deployment from the one or more distribution points through multiple phases comprising at least:
a preparation phase in which various data is captured for migration to the new operating system;
a wipe and load phase in which an old operating system is deleted and the new operating system is installed; and
a restoration phase in which captured data is migrated to the new operating system;
generating status reports within each of the phases, at least some of the status reports describing events that occur during an associated phase; and
transmitting the status reports to a system administrator.

70. The method of claim 69, wherein the wipe and load phase installs the new operating system in place.

71. The method of claim 69, wherein said act of transmitting the status reports is accomplished, at least in part, by an old client executing on an operating system that is replaced, and a new client executing on the new operating system.

72. The method of claim 69, wherein the preparation phase can capture data associated with one or more of machine state, client state, user state, and/or user data.

73. The method of claim 69, wherein the preparation phase comprises installing a pre-installation environment from which in place installation can take place.

74. One or more computer readable media having computer readable instructions thereon which, when executed by one or more processors, cause the one or more processors to perform the method of claim 69.

75. A set of application program interfaces (APIs) configured to perform the method of claim 69.

76. A system comprising:
one or more computers each having one or more computer-readable media;
computer readable instructions on the one or more computer readable media which, when executed by one or more processors, cause the one or more processors to perform a method comprising:
remotely deploying a new operating system on one or more target computers by sending image packages containing an image of the new operating system to one or more distribution points and staging deployment from the one or more distribution points through multiple phases comprising at least:
a preparation phase in which various data is captured for migration to the new operating system;
a wipe and load phase in which an old operating system is deleted and the new operating system is installed; and
a restoration phase in which captured data is migrated to the new operating system;
generating status reports within each of the phases, at least some of the status reports describing events that occur during an associated phase; and
transmitting the status reports to a system administrator.
